# EUROPÄISCHE PATENTANMELDUNG

(11) **EP 3 438 629 A1**
(43) Veröffentlichungstag der Anmeldung: **06.02.2019**
(21) Anmeldenummer: 18186873.8
(22) Anmeldetag: 01.08.2018
(51) Int. Cl.: G01L 5/10, B60P 7/13, B66C 1/66

(54) **VORRICHTUNG ZUM KALIBRIEREN EINES BOLZENS**

(30) Priorität: 02.08.2017 DE 102017117564
(71) Anmelder: Cartesy GmbH, 84453 Mühldorf Bayern (DE)
(72) Erfinder: FEMBÖCK, Josef, 84524 Neuötting (DE)
(74) Vertreter: Lichtnecker, Markus Christoph

(57) **Zusammenfassung**

Die Erfindung betrifft eine Vorrichtung, ein System sowie ein Verfahren zum Kalibrieren eines Bolzens eines Twistlock-Systems.

## Beschreibung

Die Erfindung betrifft eine Vorrichtung, ein System sowie ein Verfahren zum Kalibrieren eines Bolzens eines Twistlock-Systems.

Ein Bolzen eines Twistlock-Systems kann eine, insbesondere integrierte, Messvorrichtung zur Bestimmung einer an dem Twistlock-System angeordneten Last aufweisen. Bei der Last kann es sich insbesondere um einen Container, einen Wechselbehälter oder ein Gestell ohne Aufbau handeln.

Ein Twistlock ist eine drehbare Verriegelung, welche z.B. ISO-Container oder Wechselbehälter untereinander bzw. mit einem Trägerfahrzeug verbindet. Ein ISO-Container ist ein genormter Seefracht-Container. Ein Wechselbehälter wird auch Wechselaufbau genannt und ist zur Beförderung auf einem Lastkraftwagen geeignet.

Typischerweise umfasst ein Twistlock-System vier, sechs oder acht Twistlocks, die in Beschläge, so genannte Corner Castings, z.B. an Eckbereichen eines Containers, Wechselbehälters bzw. Gestells eingesetzt werden. Durch eine Verdrehung eines Bolzens des Twistlocks um 90° wird eine Verriegelung geschaffen und die Last kann gehoben werden. Die Twistlocks sind wichtige Bestandteile eines so genannten Spreaders, also eines Containergeschirrs.

In das Innere eines Bolzens eines Twistlocks kann z.B. ein Dehnmesssystem als Messvorrichtung eingebracht sein, um die Dehnung des Bolzens bei Belastung zu messen.

Die Messvorrichtung muss jedoch von Zeit zu Zeit kalibriert werden. Dies ist bisher mit einem hohen Aufwand verbunden. So muss der Bolzen zunächst vom Twistlock-System abgenommen und zu einer Kalibrierstation transportiert werden. Zum Kalibrieren werden oftmals Prüfgewichte verwendet.

Diese Kalibrierverfahren sind jedoch sehr zeitaufwändig und daher kostenintensiv.

Es ist daher eine Aufgabe der Erfindung, eine Vorrichtung, ein System sowie ein Verfahren zu schaffen, womit ein Bolzen eines Twistlock-Systems auf einfache und kostengünstige Weise kalibriert werden kann.

Die Lösung dieser Aufgabe erfolgt durch die Gegenstände sowie das Verfahren der unabhängigen Ansprüche.

Erfindungsgemäß umfasst die Vorrichtung zum Kalibrieren des Bolzens eine Schaftbefestigungsvorrichtung zum Befestigen eines Bolzenschaftes.

Der Bolzenschaft ist vorzugsweise kraftschlüssig an der Schaftbefestigungsvorrichtung befestigt oder befestigbar. Die Schaftbefestigungsvorrichtung kann insbesondere einen Adapter aufweisen, um verschiedene Bolzenschäfte aufnehmen zu können. Insbesondere können unterschiedliche Abstandshalter vorgesehen sein. Auch verschiedene Bolzentypen, z.B. unterschiedlicher Länge, können somit mit derselben Kalibriervorrichtung kalibriert werden.

Vorzugsweise wird ein von einem Bolzenkopf entgegengesetzter Endbereich des Bolzenschaftes an der Schaftbefestigungsvorrichtung befestigt.

Die Kalibriervorrichtung umfasst eine Bolzenkopfbefestigungsvorrichtung zum Befestigen eines Bolzenkopfes. Vorzugsweise ist der Bolzenkopf kraftschlüssig an der Bolzenkopfbefestigungsvorrichtung befestigt oder befestigbar. Der Bolzenkopf kann dabei auch kraftschlüssig an der Bolzenkopfbefestigungsvorrichtung anliegen, ohne mit dieser fest verbunden zu sein.

Der Bolzen ist auf diese Weise an zwei Seiten befestigt und insbesondere zwischen der Schaftbefestigungsvorrichtung und der Bolzenkopfbefestigungsvorrichtung eingespannt.

Eine Krafterzeugungsvorrichtung ist dazu ausgebildet, eine Kraft zwischen der Schaftbefestigungsvorrichtung und der Bolzenkopfbefestigungsvorrichtung zu erzeugen. Insbesondere kann eine Zugkraft zwischen der Schaftbefestigungsvorrichtung und der Bolzenkopfbefestigungsvorrichtung erzeugt werden. So kann z.B. am Bolzenkopf gezogen werden. Der Bolzen wird auf diese Weise belastet.

Der Bolzen umfasst vorzugsweise eine Messvorrichtung. Die Messvorrichtung kann in den Bolzen integriert sein. Durch die Messvorrichtung können insbesondere gewichtsabhängige Messdaten erfasst werden.

Die Messvorrichtung kann zumindest einen Dehnungssensor, insbesondere Dehnungsmessstreifen, vorzugsweise eine Anordnung aus Dehnungsmessstreifen, umfassen. Es können vorzugsweise mehrere, z.B. zwei oder vier, Dehnungsmessstreifen vorgesehen sein. Beispielsweise können mehrere Dehnungsmessstreifen eine Halbbrücke oder Vollbrücke bilden. Bevorzugt umfasst die Messvorrichtung zwei Vollbrücken. Die Messgenauigkeit wird dadurch erhöht.

Normalerweise wird über die gewichtsabhängigen Messdaten das Gewicht einer an dem Twistlock-System angeordnete Last, insbesondere eines Containers, Wechselbehälters oder Gestells samt Ladung, bestimmt.

Beim Kalibrieren bestimmt die Messvorrichtung die auf den Bolzen wirkende Kraft.

Die Messvorrichtung ist vorzugsweise in den Bolzen integriert. Grundsätzlich kann jedoch auch eine externe Messvorrichtung, welche beispielsweise in den Bolzen eingehängt wird, vorgesehen sein. Auch diese kann mit der erfindungsgemäßen Vorrichtung kalibriert werden.

Die bei der Kalibrierung durch die Messvorrichtung ermittelten Messdaten können an eine Auswertevorrichtung übertragen und dort z.B. weiterverarbeitet und/oder angezeigt werden. Die Übertragung kann kabelgebunden oder kabellos, insbesondere über eine Sendeeinheit, z.B. per Funk, erfolgen.

Die Kalibriervorrichtung umfasst eine Wiegevorrichtung zur Bestimmung der erzeugten Kraft. Die Wiegevorrichtung dient insbesondere als Referenzsensor für die Messvorrichtung. Anhand der durch die Wiegevorrichtung ermittelten Daten kann die Messvorrichtung des Bolzens kalibriert werden.

Die bei der Kalibrierung durch die Wiegevorrichtung ermittelten Daten können an eine Auswertevorrichtung übertragen und dort z.B. weiterverarbeitet und/oder angezeigt werden. Die Übertragung kann kabelgebunden oder kabellos, insbesondere über eine Sendeeinheit, z.B. per Funk, erfolgen. Vorzugsweise werden die Daten der Wiegevorrichtung an dieselbe Auswertevorrichtung wie die Messdaten der Messvorrichtung übertragen.

Die Wiegevorrichtung kann zumindest eine Wägezelle umfassen. Insbesondere sind Wägezellen in Gramm, Kilogramm oder Tonnen kalibriert. Grundsätzlich sind jedoch auch in Newton kalibrierte Kraftaufnehmer denkbar.

Vorzugsweise weist die Wägezelle einen Federkörper auf. Der Federkörper, z.B. ein entsprechend geformtes Metallteil, kann sich bei Einwirkung eines Gewichts verformen. Die Verformung kann beispielsweise über einen Dehnungssensor gemessen werden.

Der Federkörper kann insbesondere als Doppel- oder Multibiegebalken, Scherstab, säulenförmiger Federkörper, Ringtorsionsfederkörper und/oder Membran-Federkörper ausgebildet sein.

Die Wiegevorrichtung kann zumindest einen Dehnungssensor, insbesondere Dehnungsmessstreifen, vorzugsweise eine Anordnung aus Dehnungsmessstreifen, umfassen. Es können vorzugsweise mehrere, z.B. zwei oder vier, Dehnungsmessstreifen vorgesehen sein. Beispielsweise können mehrere Dehnungsmessstreifen eine Halbbrücke oder Vollbrücke bilden. Bevorzugt umfasst die Wiegevorrichtung zwei Vollbrücken. Die Messgenauigkeit wird dadurch erhöht.

Der Bolzen, also insbesondere die Messvorrichtung des Bolzens, wird durch die erfindungsgemäße Kalibriervorrichtung auf einfache und kostengünstige Weise kalibriert. Aufgrund des einfachen Aufbaus, bei dem insbesondere keine Prüfgewichte notwendig sind, kann die Kalibriervorrichtung auch mobil zu den zu eichenden Twistlock-Systemen gebracht werden. Die Kalibriervorrichtung ist insbesondere tragbar.

Die Bolzen müssen somit nicht zunächst von den Twistlock-Systemen demontiert und zu Kalibrierzentren transportiert werden, sondern können unmittelbar vor Ort, insbesondere auch während sie am Twistlock-System montiert sind, kalibriert werden. Auf diese Weise können die Kosten für die Kalibrierung erheblich reduziert werden.

Weiterbildungen der Erfindung sind auch den abhängigen Ansprüchen, der Beschreibung sowie den beigefügten Zeichnungen zu entnehmen.

Gemäß einer Ausführungsform sind die Schaftbefestigungsvorrichtung und die Bolzenkopfbefestigungsvorrichtung relativ zueinander bewegbar. Vorzugsweise können die Schaftbefestigungsvorrichtung und die Bolzenkopfbefestigungsvorrichtung in entgegengesetzte Richtungen gezogen werden. Auf diese Weise kann eine Zugbelastung auf den Bolzen ausgeübt werden. Eine auf den Bolzen wirkende Last kann somit simuliert werden.

Nach einer weiteren Ausführungsform ist die Schaftbefestigungsvorrichtung durch einen Träger des Twistlock-Systems gebildet. Der Bolzen ist zur normalen Verladearbeit am Twistlock-System befestigt. Zum Kalibrieren muss der Bolzen insbesondere nicht vom Twistlock-System abgenommen werden. Dadurch kann Zeit eingespart werden.

Das Twistlock-System selbst bildet hierbei als Schaftbefestigungsvorrichtung gewissermaßen einen Teil der Kalibriervorrichtung.

Das Twistlock-System kann insbesondere eine Trägerfläche, vorzugsweise eine Platte, umfassen, welche auch als Landing Area bezeichnet wird. Die Trägerfläche kann mit dem Bolzen drehfest verbunden sein. Vorzugsweise ist der Bolzen jedoch relativ zur Trägerfläche verdrehbar.

Ein Landungspin, welcher auch als Landing Pin bezeichnet wird, ist ein aus der Trägerfläche des Twistlock-Systems parallel zum Bolzen vorstehender Stift. Der Landungspin wird im normalen Betrieb um einen bestimmten Verfahrweg bewegt, insbesondere hineingedrückt, wenn der Twistlock z.B. auf dem Corner Casting landet, d.h. aufgesetzt wird. Liegt die Trägerfläche, also die Landing Area, am Corner Casting auf, so ist der Landungspin eingefahren. Nur wenn der Landungspin eingefahren ist, kann der Bolzen gedreht werden. Ist der Bolzen verdreht, wird dieser um einen Abstand leicht nach oben gezogen und verhakt sich am Corner Casting. Beim Hochziehen fährt der Landungspin wieder aus, sodass ein ungewolltes Entriegeln verhindert wird. Der Bolzen kann folglich immer nur dann gedreht werden, wenn sich die Last am Boden befindet und das Twistlock-System am Corner Casting aufliegt.

Zum Kalibrieren wird der Bolzen in die Bolzenkopfbefestigungsvorrichtung eingebracht. Diese kann vergleichbar aufgebaut sein wie ein Corner Casting. Der Landungspin wird eingefahren, sodass der Bolzen verdreht und verriegelt werden kann. Der Bolzen ist nun in der Bolzenkopfbefestigungsvorrichtung befestigt.

Gemäß einer Variante kann das Twistlock-System auch als Krafterzeugungsvorrichtung dienen. Dabei kann der Bolzen nach oben gezogen werden, um eine Zugkraft auf den Bolzen auszuüben.

Die Kalibriervorrichtung steht insbesondere fest am Boden. Beispielsweise kann diese auch am Boden verankert sein.

Vorzugsweise wird jedoch eine externe Krafterzeugungsvorrichtung eingesetzt. Dabei können die auftretenden Kräfte besser kontrolliert werden. Der Twistlock wird dabei einfach aufgesetzt, jedoch nach dem Verriegeln nicht nach oben gezogen.

Alternativ kann der Bolzen auch separat kalibriert werden. Die Kalibriervorrichtung ist in diesem Fall eine vom Twistlock-System unabhängige Vorrichtung. Der Bolzenschaft wird an einer Schaftbefestigungsvorrichtung befestigt. Durch verschiedene Adapter kann sichergestellt werden, dass auch unterschiedliche Bolzentypen von derselben Kalibriervorrichtung kalibriert werden können.

Gemäß einer weiteren Ausführungsform weist die Bolzenkopfbefestigungsvorrichtung eine Aufnahme für eine Hinterschneidung des Bolzenkopfes auf. Der Bolzenkopf kann in die Bolzenkopfbefestigungsvorrichtung eingebracht und z.B. verdreht werden. Die Aufnahme kann einen Anschlag für die Hinterschneidung des Bolzenkopfes umfassen.

Nach einer weiteren Ausführungsform umfasst die Bolzenkopfbefestigungsvorrichtung ein Gestell, welches eine Höhe von mindestens 1 m, vorzugsweise von mindestens 1,5 m, aufweist. Dies ist insbesondere dann sinnvoll, wenn der Bolzen am Twistlock-System befestigt ist.

Häufig können Twistlock-Systeme nicht bis zum Boden gefahren werden. Dies ist im normalen Betrieb auch nicht erforderlich, zumal die Bolzen an Corner Castings im oberen Bereich von Containern befestigt werden. Wird hingegen eine Last auf einem flachen Gestell ohne Aufbau verladen oder gewogen, so kommt ein so genanntes Überhöhungsgeschirr zum Einsatz, um den Weg bis zum unteren, im flachen Gestell angeordneten Corner Casting zu überbrücken.

Um beim Kalibrieren den Abstand zum Twistlock-System zu überbrücken, wird die Bolzenkopfbefestigungsvorrichtung durch das Gestell erhöht. Der Bolzen kann somit problemlos in die Bolzenkopfbefestigungsvorrichtung eingebracht werden.

Gemäß einer weiteren Ausführungsform ist die Vorrichtung als mobile Einheit ausgebildet. Die Kalibriervorrichtung ist insbesondere kompakt und weist nur vergleichsweise kleine Abmessungen auf. Beispielsweise ist die Kalibiervorrichtung maximal viermal, dreimal oder doppelt so breit wie der Bolzenkopf.

Die Kalibriervorrichtung kann insbesondere tragbar sein. Beispielsweise kann diese einen Griff, z.B. einen Henkel, aufweisen. Auch können mehrere, z.B. zwei, Griffe, insbesondere auf gegenüberliegenden Seiten, vorgesehen sein.

Die Kalibriervorrichtung kann problemlos zum Einsatzort bewegt und dort eingesetzt werden, wodurch Zeit und Kosten gespart werden können.

Nach einer weiteren Ausführungsform ist eine pneumatische, hydraulische, elektrische und/oder mechanische Krafterzeugungsvorrichtung vorgesehen. Insbesondere kann eine Zugkraft erzeugt werden.

Bevorzugt wird die Kraft elektro-hydraulisch erzeugt. Insbesondere können ein Druckzylinder sowie ein Hüllzylinder vorgesehen sein. Der Druckzylinder kann vorzugsweise relativ zum Hüllzylinder bewegbar sein.

Es kann eine externe oder interne Pumpe vorgesehen sein. Auch der Einsatz einer Handpumpe ist möglich.

Gemäß einer weiteren Ausführungsform ist die Schaftbefestigungsvorrichtung kraftschlüssig mit einem Druckzylinder verbunden oder verbindbar. Es kann sich hierbei um eine feste oder lose Verbindung handeln. So kann die Schaftbefestigungsvorrichtung beispielsweise auch lediglich kraftschlüssig am Druckzylinder anliegen, ohne mit diesem fest verbunden zu sein.

Auch kann die Schaftbefestigungsvorrichtung einen Teil eines Druckzylinders bilden. Bei einer Bewegung des Druckzylinders wird somit auch die Schaftbefestigungsvorrichtung bewegt.

Die Wiegevorrichtung kann insbesondere mit dem Druckzylinder in Kontakt stehen. Beim Kalibrieren wird die Wiegevorrichtung vorzugsweise von unten gegen den Druckzylinder gedrückt.

Nach einer weiteren Ausführungsform ist die Bolzenkopfbefestigungsvorrichtung kraftschlüssig mit einem Hüllzylinder verbunden oder verbindbar. Auch kann die Bolzenkopfbefestigungsvorrichtung einen Teil eines Hüllzylinders bilden. Bei einer Bewegung des Druckzylinders wird der Hüllzylinder z.B. nach unten gegen die Hinterschneidung des Bolzenkopfes gedrückt und der Bolzen somit auf Zug belastet.

Die Erfindung betrifft auch ein System mit zwei, vier, sechs oder acht erfindungsgemäßen Vorrichtungen zum Kalibrieren von Bolzen eines Twistlock-Systems. Da ein Twistlock-System je nach Ausführungsform zwei, vier, sechs oder acht Bolzen aufweisen kann, kann somit das gesamte Twistlock-System gleichzeitig kalibriert werden.

Jedem Bolzen des Twistlock-Systems kann hierbei eine Kalibriervorrichtung zugeordnet werden. Durch die zeitgleiche Kalibrierung können Zeit und Kosten gespart werden.

Grundsätzlich ist es jedoch auch möglich, weniger Kalibriervorrichtungen einzusetzen und die Bolzen des Twistlock-Systems nach und nach zu kalibrieren.

Die Erfindung betrifft auch ein Verfahren zum Kalibrieren eines Bolzens eines Twistlock-Systems, insbesondere mit einer erfindungsgemäßen Vorrichtung zum Kalibrieren.

Zunächst wird ein Bolzenschaft an einer Schaftbefestigungsvorrichtung befestigt. Der Bolzenschaft kann auch bereits z.B. an der Schaftbefestigungsvorrichtung eines Twistlock-Systems befestigt sein.

Ein Bolzenkopf wird an einer Bolzenkopfbefestigungsvorrichtung befestigt. Insbesondere kann der Bolzen hierbei in die Bolzenkopfbefestigungsvorrichtung eingefahren werden, indem der Twistlock abgesenkt wird. Anschließend kann der Bolzenkopf durch ein Verdrehen des Bolzens um 90° befestigt werden.

Eine Krafterzeugungsvorrichtung erzeugt eine Kraft zwischen der Schaftbefestigungsvorrichtung und der Bolzenkopfbefestigungsvorrichtung. Der Bolzen wird auf diese Weise belastet.

Eine Wiegevorrichtung bestimmt die erzeugte Kraft.

Der von der Wiegevorrichtung ermittelte Wert wird mit einem von einer Messvorrichtung des Bolzens gemessenen Messwert verglichen. Auf diese Weise kann die Messvorrichtung im Bolzen kalibriert werden.

Zum Kalibrieren können verschiedene Kräfte erzeugt werden, z.B. zwischen 0 Tonnen und 15 Tonnen. Der Bolzen kann dabei auch überbelastet werden. Insbesondere kann ein Kalibrierpunkt von 7,5 Tonnen gewählt werden.

Es können mehrere Kalibrierpunkte bestimmt und/oder verschiedene Messkurven erzeugt werden, mittels welcher die Messvorrichtung kalibriert werden kann. Die Unterschiede zwischen den Kalibrierpunkten bzw. den Messkurven der Wiegevorrichtung und der Messvorrichtung können dadurch berücksichtigt werden.

Alle hier beschriebenen Ausführungsformen und Bauteile der Vorrichtungen sind insbesondere dazu ausgebildet, z.B. mittels einer Steuerungsvorrichtung, nach dem hier beschriebenen Verfahren betrieben zu werden. Ferner können alle hier beschriebenen Ausführungsformen der Vorrichtungen sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Schnittansicht einer ersten Ausführungsform einer erfindungsgemäßen Kalibriervorrichtung, und
- Fig. 2: eine Schnittansicht einer zweiten Ausführungsform einer erfindungsgemäßen Kalibriervorrichtung.

Zunächst ist zu bemerken, dass die dargestellten Ausführungsformen rein beispielhafter Natur sind. Insbesondere kann die Schaftbefestigungsvorrichtung an den jeweiligen Bolzentyp angepasst sein. Auch kann die Kraft auf andere Weise erzeugt werden. Die Merkmale einer Ausführungsform können auch beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

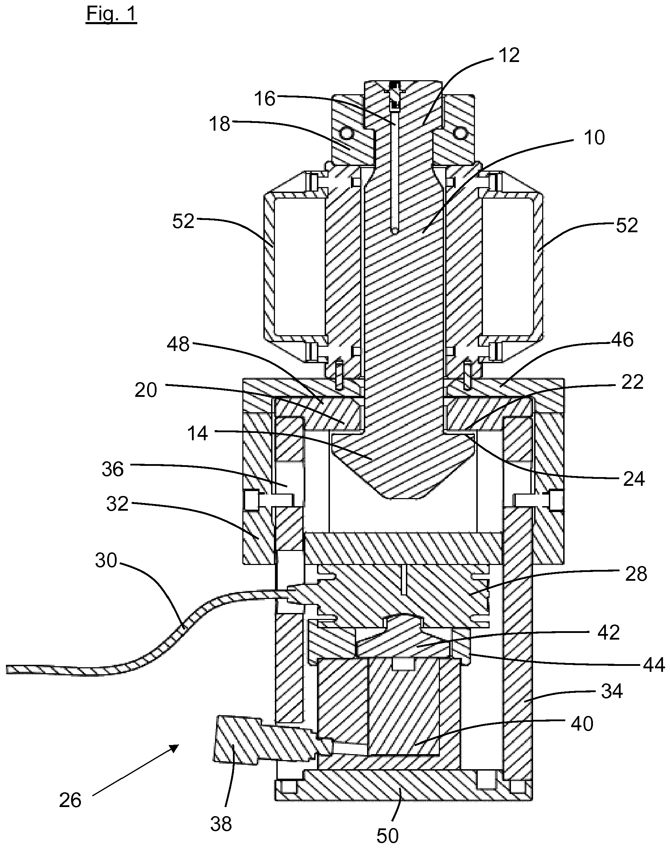

Fig. 1 zeigt eine Vorrichtung zum Kalibrieren eines Bolzens 10. Der Bolzen 10 umfasst einen Bolzenschaft 12 und einen Bolzenkopf 14. Im Inneren des Bolzens 10 ist eine Messvorrichtung 16, z.B. ein Dehnungsmessstreifen, vorgesehen. Über diese Messvorrichtung 16 wird normalerweise das Gewicht einer am Bolzenkopf 14 angeordneten Last bestimmt.

Die Kalibriervorrichtung umfasst eine Schaftbefestigungsvorrichtung 18, in der der Bolzenschaft 12 befestigt werden kann. Insbesondere kann die Schaftbefestigungsvorrichtung 18 als Adapter ausgebildet sein oder einen Adapter umfassen, um auch verschiedene Bolzentypen befestigen zu können.

Die Schaftbefestigungsvorrichtung 18 kann beispielsweise nach innen gerichtete Vorsprünge aufweisen, um den Bolzenschaft 12 festzuklemmen.

Der Bolzenschaft 12 kann z.B. über ein Gewinde befestigt werden. Auch kann der Bolzenschaft 12 eine Aussparung aufweisen, in die z.B. ein Befestigungsbolzen oder ein Federstift eingeschlagen wird.

Die Vorrichtung umfasst eine Bolzenkopfbefestigungsvorrichtung 20 mit einer als Anschlag 22 ausgebildeten Aufnahme. Eine Hinterschneidung 24 des Bolzenkopfes 14 kann mit dem Anschlag 22 in Kontakt treten. Der Bolzenkopf 14 ist auf diese Weise an der Bolzenkopfbefestigungsvorrichtung 20 befestigt.

Ferner umfasst die Vorrichtung eine Krafterzeugungsvorrichtung 26, welche eine Kraft zwischen der Schaftbefestigungsvorrichtung 18 und der Bolzenkopfbefestigungsvorrichtung 20 erzeugen kann.

Eine Wiegevorrichtung 28 kann die erzeugte Kraft bestimmen. Vorzugsweise ist die Wiegevorrichtung 28 z.B. über ein Kabel 30 mit einer nicht gezeigten Auswertevorrichtung verbunden. Das Kabel 30 kann auch als Stromversorgung für die Wiegevorrichtung 28 dienen.

Die Krafterzeugungsvorrichtung 26 umfasst einen Druckzylinder 32 sowie einen Hüllzylinder 34. Der Druckzylinder 32 kann entlang einer Führung 36 relativ zum Hüllzylinder 34 bewegt werden.

Der Druckzylinder 32 ist kraftschlüssig mit der Schaftbefestigungsvorrichtung 18 verbunden, während ein oberer Abschnitt des Hüllzylinders 34 die Bolzenkopfbefestigungsvorrichtung 20 bildet.

Die Krafterzeugungsvorrichtung 26 arbeitet insbesondere hydraulisch. Über eine Hydraulikeinheit 38 kann eine unter Druck stehende Flüssigkeit einströmen und einen Kurzhubzylinder 40 anheben. Ein Stempel 42, welcher von einem Stempelhalter 44 gehalten wird, wird dadurch nach oben gedrückt. Dieser drückt wiederum die Wiegevorrichtung 28 nach oben, sodass diese mit dem Druckzylinder 32 in Kontakt tritt.

Der Druckzylinder 32 bewegt sich relativ zum Hüllzylinder 34 nach oben. Insbesondere drückt ein Druckzylinderdeckel 46 nach oben.

Ein Hüllzylinderdeckel 48 hindert den Bolzen 10 an einer Bewegung nach oben, da der Bolzenkopf 14 am Anschlag 22 anschlägt. Der Bolzenkopf 14 wird somit gewissermaßen nach unten gezogen.

Die Wiegevorrichtung 28 bestimmt die erzeugte Kraft. Auch die Messvorrichtung 16 im Bolzen 10 ermittelt Messdaten. In der Auswerteeinheit können die Daten abgeglichen und die Messvorrichtung 16 kalibriert werden.

Die Kalibriervorrichtung steht über eine Bodenplatte 50 fest am Boden. Optional kann diese auch am Boden verankert sein.

Die Kalibriervorrichtung ist als mobile Einheit ausgebildet. Zur besseren Tragbarkeit kann die Kalibriervorrichtung beispielsweise Griffe 52 aufweisen.

So kann die Kalibriervorrichtung problemlos an verschiedenen Einsatzorten, insbesondere direkt an Verladeorten, z.B. Häfen, eingesetzt werden.

Dabei kann der Bolzen 10, wie in Fig. 1 gezeigt, von einem Twistlock-System abgenommen sein.

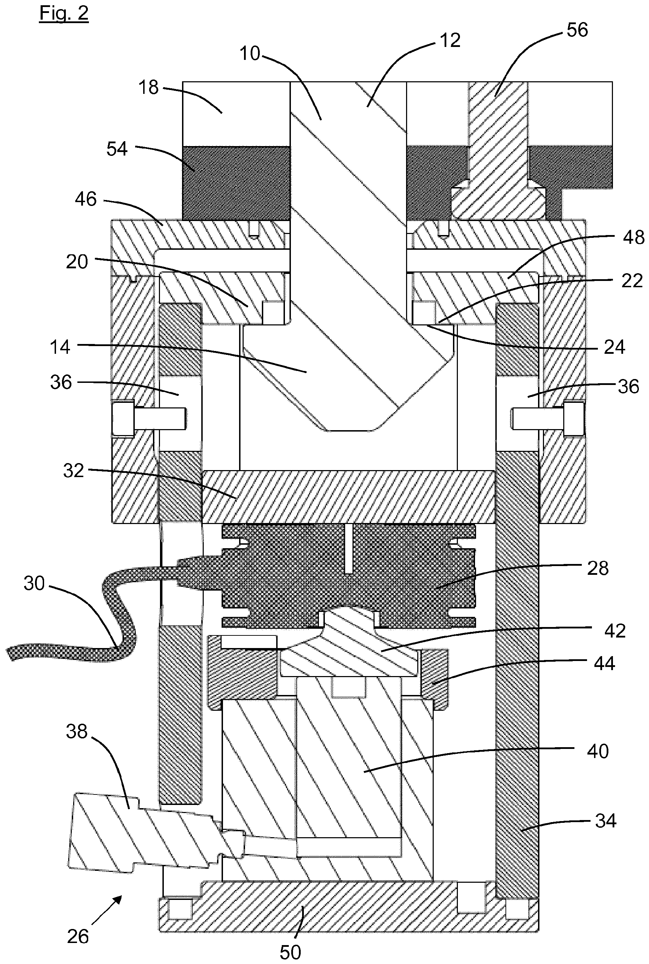

Alternativ kann der Bolzen 10, wie in Fig. 2 dargestellt ist, auch während der Kalibrierung am Twistlock-System verbleiben.

Das Twistlock-System weist hierbei einen Träger 54 sowie einen Landungspin 56 auf.

Um die Kalibrierung durchführen zu können, wird die Kalibriervorrichtung mittig zum Bolzen 10 unterhalb des Trägers 54 ausgerichtet. Danach wird der Träger 54 langsam auf die Kalibriervorrichtung abgesetzt. Der Landungspin 56 fährt sich dabei ein.

Der Bolzen 10 kann nun gedreht werden, sodass die Kalibriervorrichtung am Twistlock-System hängt.

Durch Betätigung der Hydraulikeinheit 38 wird die Wiegevorrichtung 28 gegen den Druckzylinder 32 gedrückt, welcher sich dann gegen den Träger 54 abstützt. In Folge dessen wird der Hüllzylinderdeckel 48 gegen den Bolzen 10 gedrückt, sodass dieser auf Zug belastet wird. Auf diese Weise kann die Kalibrierung direkt vor Ort am Spreader durchgeführt werden.

### Bezuqszeichenliste

- 10: Bolzen
- 12: Bolzenschaft
- 14: Bolzenkopf
- 16: Messvorrichtung
- 18: Schaftbefestigungsvorrichtung
- 20: Bolzenkopfbefestigungsvorrichtung
- 22: Anschlag, Aufnahme
- 24: Hinterschneidung
- 26: Krafterzeugungsvorrichtung
- 28: Wiegevorrichtung
- 30: Kabel
- 32: Druckzylinder
- 34: Hüllzylinder
- 36: Führung
- 38: Hydraulikeinheit
- 40: Kurzhubzylinder
- 42: Stempel
- 44: Stempelhalter
- 46: Druckzylinderdeckel
- 48: Hüllzylinderdeckel
- 50: Bodenplatte
- 52: Griff
- 54: Träger
- 56: Landungspin

## Patentansprüche

1. Vorrichtung zum Kalibrieren eines Bolzens (10) eines Twistlock-Systems, umfassend
eine Schaftbefestigungsvorrichtung (18) zum Befestigen eines Bolzenschaftes (12),
eine Bolzenkopfbefestigungsvorrichtung (20) zum Befestigen eines Bolzenkopfes (14),
eine Krafterzeugungsvorrichtung (26) zur Erzeugung einer Kraft zwischen der Schaftbefestigungsvorrichtung (18) und der Bolzenkopfbefestigungsvorrichtung (20), und
eine Wiegevorrichtung (28) zur Bestimmung der erzeugten Kraft.

2. Vorrichtung nach Anspruch 1,
**dadurch gekennzeichnet,**
**dass** die Schaftbefestigungsvorrichtung (18) und die Bolzenkopfbefestigungsvorrichtung (20) relativ zueinander bewegbar sind.

3. Vorrichtung nach Anspruch 1 oder 2,
**dadurch gekennzeichnet,**
**dass** die Schaftbefestigungsvorrichtung (18) durch einen Träger (54) des Twistlock-Systems gebildet ist.

4. Vorrichtung nach einem der vorhergehenden Ansprüche,
**dadurch gekennzeichnet,**
**dass** die Bolzenkopfbefestigungsvorrichtung (20) eine Aufnahme (22) für eine Hinterschneidung (24) des Bolzenkopfes (14) aufweist.

5. Vorrichtung nach einem der vorhergehenden Ansprüche,
**dadurch gekennzeichnet,**
**dass** die Bolzenkopfbefestigungsvorrichtung (20) ein Gestell umfasst, welches eine Höhe von mindestens 1 m, vorzugsweise von mindestens 1,5 m, aufweist.

6. Vorrichtung nach einem der vorhergehenden Ansprüche,
**dadurch gekennzeichnet,**
**dass** die Vorrichtung als mobile Einheit ausgebildet ist.

7. Vorrichtung nach einem der vorhergehenden Ansprüche,
**dadurch gekennzeichnet,**
**dass** eine pneumatische, hydraulische, elektrische und/oder mechanische Krafterzeugungsvorrichtung (26) vorgesehen ist.

8. Vorrichtung nach einem der vorhergehenden Ansprüche,
**dadurch gekennzeichnet,**
**dass** die Schaftbefestigungsvorrichtung (18) kraftschlüssig mit einem Druckzylinder (32) verbunden oder verbindbar ist oder einen Teil eines Druckzylinders (32) bildet.

9. Vorrichtung nach einem der vorhergehenden Ansprüche,
**dadurch gekennzeichnet,**
**dass** die Bolzenkopfbefestigungsvorrichtung (20) kraftschlüssig mit einem Hüllzylinder (34) verbunden oder verbindbar ist oder einen Teil eines Hüllzylinders (34) bildet.

10. System mit zwei, vier, sechs oder acht Vorrichtungen zum Kalibrieren von Bolzen (10) eines Twistlock-Systems nach einem der vorhergehenden Ansprüche.

11. Verfahren zum Kalibrieren eines Bolzens (10) eines Twistlock-Systems, insbesondere mit einer Vorrichtung zum Kalibrieren nach einem der Ansprüche 1 bis 9 oder einem System nach Anspruch 10, bei dem ein Bolzenschaft (12) an einer Schaftbefestigungsvorrichtung (18) befestigt wird,
ein Bolzenkopf (14) an einer Bolzenkopfbefestigungsvorrichtung (20) befestigt wird,
eine Krafterzeugungsvorrichtung (26) eine Kraft zwischen der Schaftbefestigungsvorrichtung (18) und der Bolzenkopfbefestigungsvorrichtung (20) erzeugt, und
eine Wiegevorrichtung (28) die erzeugte Kraft bestimmt.
